Europäisches Patentamt

European Patent Office

Office européen des brevets

(19)

(11) Numéro de publication: **0 212 750**
**A1**

(12)                                    **DEMANDE DE BREVET EUROPEEN**

(21) Numéro de dépôt: **86201398.4**

(22) Date de dépôt: **08.08.86**

(51) Int. Cl.⁴: **A 47 J 37/07**

(30) Priorité: **14.08.85 BE 215476**

(43) Date de publication de la demande: **04.03.87**
**Bulletin 87/10**

(84) Etats contractants désignés: **AT BE CH DE FR GB IT LI LU NL SE**

(71) Demandeur: **Stas, Gaston, Kapelstraat 107, B-3720 Kortessem (BE)**

(72) Inventeur: **Stas, Gaston, Kapelstraat 107, B-3720 Kortessem (BE)**

(74) Mandataire: **Pieraerts, Jacques et al, Bureau Gevers S.A. rue de Livourne 7, Bte. 1, B-1050 Bruxelles (BE)**

(54) Dispositif à utiliser comme barbecue.

(57) Un dispositif, constitué par une structure formée par deux volumes dressés pour le combustible, en général du charbon de bois, dans lequel entre lesdits volumes et approximativement au niveau de leur bord supérieur est prévue une grille (8), et lesdits volumes sont fermés à leur sommet par un couvercle (7).

## Dispositif à utiliser comme barbecue

La présente invention est relative à un dispositif à utiliser comme barbecue, constitué par une structure formée par deux volumes dressés pour le combustible, en général du charbon de bois.

Un barbecue ou "grill" dans lequel de la viande ou du poisson est grillé sur une grille au-dessus et entre deux volumes dressés dans lesquels le combustible est amené à brûler, a été décrit dans le brevet américain 2.335.217.

Un inconvénient d'un tel dispositif doit être considéré dans le fait que ladite grille se trouve en partie au-dessus des volumes pour le combustible et ainsi qu'on ne peut éviter que la graisse ou l'huile qui est utilisée pour griller, tombe sur le combustible incandescent et engendre ainsi une quantité indésirable de fumée.

Le barbecue suivant ce brevet présente de plus aussi le très grand inconvénient que, tout comme en fait tous les barbecues, des enfants peuvent verser un combustible liquide sur le charbon de bois incandescent, ce qui peut toujours engendrer un très grand danger.

En outre, le barbecue suivant ce brevet américain présente à l'avant une large ouverture à travers laquelle peut circuler une quantité indésirable d'air. Le réglage du débit d'air à travers le combustible n'est donc pas possible.

L'invention a à présent pour but d'éliminer ces inconvénients et d'offrir un dispositif avec lequel on peut éviter que des flammes apparaissent, ce qui brûle la viande ou le poisson, que de la fumée et donc aussi des odeurs désagréables soient engendrées, et qui est en outre très sûr aussi bien pour celui qui se sert du barbecue que pour des tiers.

Pour rendre ceci possible suivant l'invention, on prévoit entre lesdits volumes et approximativement à la hauteur de leur bord supérieur, une grille, et ces volumes sont fermés à leur sommet par un couvercle.

Toujours suivant l'invention, des ouvertures réglables pour le passage de l'air sont prévues dans lesdits volumes, à la partie inférieure.

Dans une forme de réalisation appliquée de préférence, lesdits volumes dressés se présentent suivant la direction longitudinale du dispositif.

D'autres détails et particularités de l'invention ressortiront de la description ci-après, donnée à titre d'exemple non limitatif et en se référant aux dessins annexés, dans lesquels:

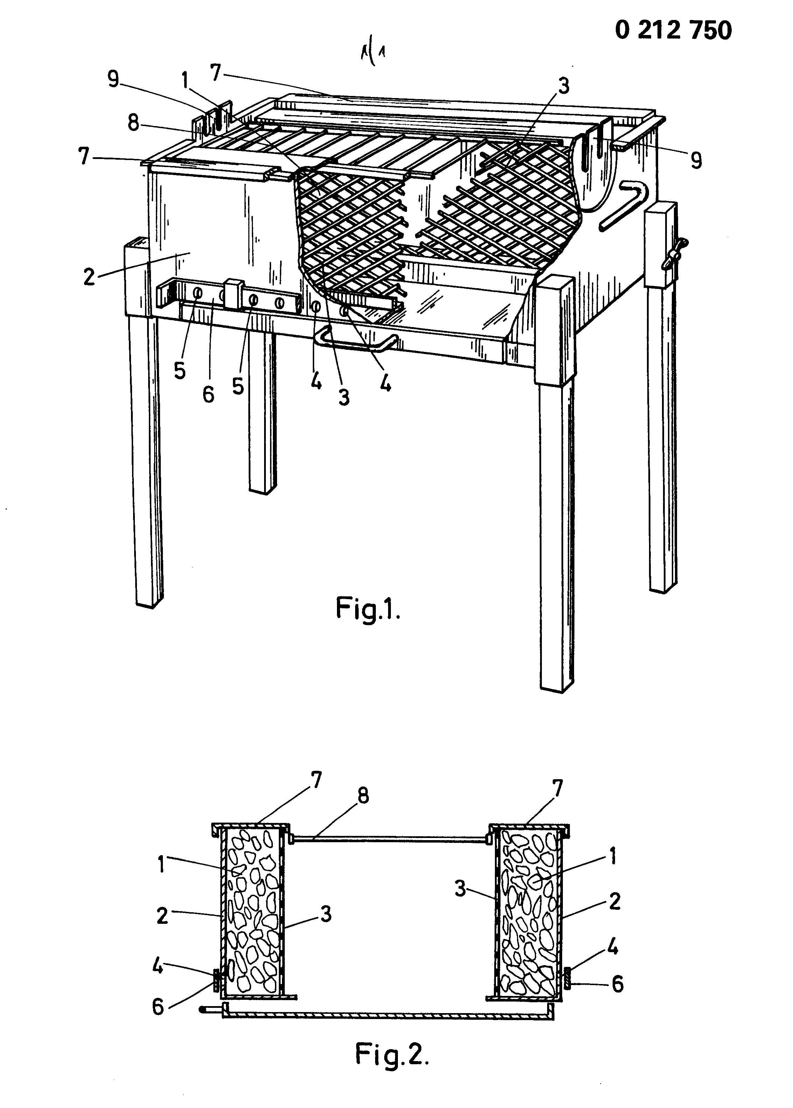

La figure 1 est une vue en prespective, avec brisure partielle.

La figure 2 est une représentation schématique d'une vue en coupe du barbecue suivant l'invention.

Le dispositif à utiliser comme barbecue, suivant ces figures, est constitué par une structure avec quatre parois verticales dont deux sont constituées par des volumes ou chambres 1. Chaque volume est formé par une plaque externe 2 et, sur le côté interne, un treillis métallique 3. Entre la plaque verticale 2 et ledit treillis 3 est donc formé un volume destiné à recevoir le combustible, en général du charbon de bois.

A la partie inférieure de la plaque 2 sont pratiquées des ouvertures 4 qui peuvent être considérées comme réglables, parce que ces ouvertures coopèrent avec des ouvertures 5 qui sont pratiquées dans un registre 6 pouvant être animé d'un mouvement de va-et-vient. La quantité d'air qui est admise dans les volumes dressés, donc à travers le combustible incandescent, est parfaitement réglable.

A la partie supérieure, les volumes dressés formés chacun par une plaque 2 et un treillis 3, sont fermés par un couvercle 7 qui obture les volumes dressés.

Entre les deux volumes dressés se situe la grille 8 sur laquelle est posée la viande ou le poisson à griller. Il est évident que la graisse s'égouttant ne peut jamais parvenir sur le charbon de bois incandescent et que la production de flammes ou de fumée est exclue.

Une caractéristique remarquable du dispositif suivant l'invention doit donc être considérée dans le fait que la viande ou le poisson à griller sur la grille 8 ne peut jamais se trouver au-dessus du combustible incandescent. Le grillage a lieu ici exclusivement par la chaleur rayonnée. De la graisse ou de l'huile s'égouttant est recueillie de préférence par un godet rempli d'eau qui se trouve à la partie inférieure dans le dispositif.

Dans la forme de réalisation la plus avantageuse, les volumes dressés, destinés à recevoir le combustible, s'étendent suivant la direction longitudinale du dispositif ou barbecue.

Dans les petits côtés peuvent être prévus des moyens pour recevoir une broche, cas dans lequel la grille 8 doit d'abord être retirée. Une broche peut par exemple reposer dans des encoches 9 prévues dans ce but dans les petites parois du barbecue.

D'après la description venant d'être donnée d'un dispositif à utiliser comme barbecue suivant l'invention, il apparaît très clairement qu'il possède un certain nombre d'avantages remarquables.

Ces avantages peuvent être résumés comme suit:

1. La production de flammes par de l'huile ou de la graisse s'égouttant sur le charbon de bois incandescent est exclue. De telles flammes sont très désavantageuses, elles brûlent les mets, qui présentent alors des propriétés cancérigènes;

2. Le fait de verser par accident ou volontairement un liquide sur le charbon de bois incandescent n'est pas possible, à cause de la présence des couvercles;

3. Etant donné que les couvercles sont amovibles, du charbon de bois peut être ajouté sans interrompre le grillage;

4. Etant donné que les volumes dressés destinés à être remplis de charbon de bois, sont fermés sur le côté extérieur, il est possible en prévoyant des perforations de tirage, de régler la quantité d'air admis. Le rendement en calories est plus élevé et celles-ci sont en outre mieux utilisées;

5. Grâce à la structure fermée, le danger que des étincelles ou des cendres incandescentes soient projetées à partir du dispositif, est inexistant, de telle sorte que la sécurité est encore accrue.

Il doit toutefois être entendu que la présente invention n'est en aucune façon limitée aux formes de réalisation ci-avant et que bien des modifications peuvent y être apportées sans sortir du cadre du présent brevet.

## Revendications

1. Dispositif à utiliser comme barbecue, constitué par une structure formée par deux volumes dressés pour le combustible, en général du charbon de bois, caractérisé en ce qu'entre lesdits volumes et approximativement au niveau de leur bord supérieur est prévue une grille (8), et en ce que lesdits volumes sont fermés à leur sommet par un couvercle (7).

2. Dispositif suivant la revendication 1, caractérisé en ce que dans lesdits volumes sont pratiquées, à la partie inférieure, des ouvertures réglables (4) pour le passage de l'air.

3. Dispositif suivant l'une ou l'autre des revendications 1 et 2, caractérisé en ce que des moyens sont prévus pour laisser une broche tourner entre lesdits volumes.

4. Dispositif suivant l'une quelconque des revendications 1 à 3, caractérisé en ce que lesdits volumes dressés se présentent suivant la direction longitudinale du dispositif.

5. Dispositif suivant l'une quelconque des revendications 1 à 4, caractérisé en ce que lesdits volumes dressés sont formés, sur le côté externe, par une plaque (2) et, sur le côté interne, par un treillis métallique (3).

Fig.1.

Fig.2.

Office européen des brevets

# RAPPORT DE RECHERCHE EUROPEENNE

0 212 750

EP 86 20 1398

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-3 126 903 (NIEWIND) <br> * Figures 1,4,5 * | 1 | A 47 J 37/07 |
| A | | 3,5 | |
| | --- | | |
| Y | US-A-3 683 791 (RAST) <br> * Figures 7-9 * | 1 | |
| A | | 2,4,5 | |
| | --- | | |
| X | US-A-3 091 170 (WILSON) <br> * Figure 1 * | 1 | |
| | --- | | |
| D,Y | US-A-2 335 217 (TATE) <br> * En entier * | 1 | |
| | | | DOMAINES TECHNIQUES RECHERCHES (Int. Cl.4) |
| A | | 2,3,5 | A 47 J |
| | --- | | |
| Y | US-A-3 182 585 (RENSCH et al.) <br> * En entier * | 1 | |
| A | | 3,5 | |
| | --- | | |
| Y | US-A-3 324 788 (LA FRANCE) <br> * En entier * | 1 | |
| | ---     -/- | | |

Le présent rapport de recherche a été établi pour toutes les revendications

| Lieu de la recherche <br> LA HAYE | Date d'achèvement de la recherche <br> 24-11-1986 | Examinateur <br> SCHARTZ J. |
|---|---|---|

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 120 237  (MECHERLEN) <br> * Figure 1 * | 1 | |
| A | | 3,5 | |
| | --- | | |
| A | US-A-3 247 827  (CREMER) <br> *  Figures 2,7; colonne 2, lignes 57-63 * | 2 | |
| | ----- | | |

DOMAINES TECHNIQUES RECHERCHES (Int. Cl.4)

Le présent rapport de recherche a été établi pour toutes les revendications

| Lieu de la recherche <br> LA HAYE | Date d'achèvement de la recherche <br> 24-11-1986 | Examinateur <br> SCHARTZ J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82